# EUROPÄISCHE PATENTSCHRIFT

(11) **EP 4 325 776 B1**
(45) Veröffentlichungstag und Bekanntmachung des Hinweises auf die Patenterteilung: **21.10.2026**
(21) Anmeldenummer: 23184432.5
(22) Anmeldetag: 10.07.2023
(51) Int. Cl.: H04L 12/403

(54) **MODULBUS-SEGMENT UND VERFAHREN ZUR AUTOMATION EINER BEHANDLUNGSANLAGE**
MODULAR BUS SEGMENT AND METHOD FOR AUTOMATION OF A TREATMENT SYSTEM
SEGMENT DE BUS MODULAIRE ET PROCÉDÉ D'AUTOMATISATION D'UNE INSTALLATION DE TRAITEMENT

(30) Priorität: 16.08.2022 DE 102022120561
(43) Veröffentlichungstag der Anmeldung: 21.02.2024
(73) Patentinhaber: Turck Holding GmbH, 58553 Halver (DE)
(72) Erfinder: Janczak, Harald, 32805 Horn-Bad Meinberg (DE)
(74) Vertreter: DTS Patent- und Rechtsanwälte PartmbB

(56) Entgegenhaltungen:
- EP-B1- 1 592 177
- US-A1- 2008 300 732
- US-B1- 6 597 693

## Beschreibung

Die vorliegende Erfindung betrifft ein MODULBUS-System zur Anbindung an ein Netzwerk und ein Verfahren zum Betrieb eines solchen MODULBUS-Systems. Im Stand der Technik sind in Reihe geschaltete MODULBUS-System bekannt, beispielsweise offenbart die EP 1 509 005 A1 ein MODULBUS-System zur Übertragung von Daten, an welches mehrere Teilnehmer angeschlossen sind. Hierbei wird innerhalb des Punkt-zu-Punkt-Übertragungsprotokolls ein Broadcast-Telegramm definiert, innerhalb welchem ausgewählte Daten in einem BroadcastÜbertragungsmodus übertragen werden können.

Weiterhin offenbart die WO 2018/215299 A1 ein Verfahren zur Verarbeitung von Prozessdaten durch eine Mehrzahl von in Reihe geschalteten Datenbusteilnehmern eines Lokalbusses, der beispielsweise als Ringbus ausgeführt sein kann. Hierbei kann jeder Ausgang eines Datenbusteilnehmers mit einem Feldgerät verbunden sein.

Hierbei ist die jeweilige Datenübertragungsrate ein limitierender Faktor, der komplexere MODULBUS-System im Ausbau limitiert.

Weiterer relevanter Stand der Technik ist in der US 6 597 693 B1 beschrieben. Es ist die Aufgabe der vorliegenden Erfindung ein verbessertes Modulbus-Segment und ein entsprechendes Verfahren zur Datenübertragung vorzuschlagen, welche hierzu eine Verbesserung darstellen.

Diese Aufgabe wird erfindungsgemäß gelöst durch ein Modulbus-Segment nach den Merkmalen des Anspruchs 1 und einem Verfahren nach den Merkmalen des Anspruches 8. Vorteilhafte Ausgestaltungen sind in den jeweiligen, zugehörigen Unteransprüchen angegeben.

Danach wird die Aufgabe gelöst durch ein Modulbus-Segment, zur Anbindung an ein Netzwerk oder ein MODULBUS-System, insbesondere an ein Feldbus- oder Datenbusnetz, Ethernet, SPS etc. Das Modulbus-Segment umfasst mindestens ein Gateway und mindestens vier Slave-Module, insbesondere fünf oder mehr Slave-Module, wobei das Gateway und die mindestens vier Slave-Module in Reihe geschaltet sind und gemeinsam ein Modulbus-Segment bilden. Ein Slave-Modul umfasst hierbei das Folgende:
- zur Stromversorgung mindestens einen zweiadrigen Anschuss für eine Versorgungsleitung,
- zur Kommunikation datenaufwärts mindestens eine UP_Eingangsschnittstelle und mindestens eine UP_Ausgangsschnittstelle und datenabwärts eine DN-Ausgangsschnittstelle, und wobei an der Eingangsseite des Modul-Segments das Gateway angeordnet ist. Hierbei weist das Modulbus-Segment mindestens zwei Sub-Segmente auf oder ist hieraus gebildet, welche jeweils eine Eingangsseite und eine Ausgangsseite aufweisen, und wobei
- mindestens ein Sub-Segment ausgebildet ist, zur Kommunikation in einer ersten Geschwindigkeit Daten zu übertragen und
- mindestens ein Sub-Segment ausgebildet ist, zur Kommunikation in einer zweiten Daten zu übertragen, welche unterschiedlich ist zur ersten Geschwindigkeit und/oder eine mindestens teilweise Datenkonvertierung von Daten vorzunehmen, die empfangen wurden.

Das Gateway (Gatewaymodul), welches ein übergeordnetes Netz, wie ein Ethernet oder ein Feldbus, wie ein CAN-Bus, Modbus, PROFINET oder ein Point-to-Point-Netz, wie ein IO-Link oder ein SPE (Single Pair Ethernet) angeschlossen ist, bildet für die in Reihe geschaltete Sub-Module und Slave-Module das gemeinsame Eingangsgateway. Die Sub-Module eines Subsegments sind insbesondere in einer sogenannten Daisy-Chain aneinandergereiht. Der Vorteil bei der Aufteilung des Modul-Segments in Sub-Segmente hat den großen Vorteil, dass diese ausgebildet werden können, um mit unterschiedlichen Geschwindigkeiten Daten zu übertragen. So kann ein erstes Sub-Segment mit einer Geschwindigkeit der Datenübertragung von 12 Mbit/s arbeiten und eine weiteres Sub-Modul kann beispielsweise mit einer Geschwindigkeit der Datenübertragung von 3 Mbit/s arbeiten. Die einzelnen Slave-Module können jeweils mit einem Feldgerät verbunden sein.

Vorliegend ist unter "mindestens einer UP_Eingangsschnittstelle" oder "mindestens einer UP_Ausgangsschnittstelle" zu verstehen, dass diese jeweils aus mehreren einzelnen Adern mit entsprechenden Verbindungselementen oder Steckverbindern bestehen. Vorteilhafterweise wird immer nur eine Ader der jeweiligen UP_Eingangsschnittstelle oder UP_Ausgangsschnittstelle als Verbindung zu einem benachbarten Modul, wie einem Slave-Modul oder einem Adaptermodul aktiv genutzt, wobei diese im Regelfall kontaktiert sind, als Daten geleitet werden könnten.

Hierbei kann vorgesehen sein, dass das Fehlen eines benachbarten Moduls erkannt wird und die Datenweiterleitung von einem Slave-Modul oder einen Adaptermodul in UP-Richtung auf einer anderen Ader erfolgt, insbesondere der "nächsten" Ader, indem diese eine definierte Ab- oder Reihenfolgen aufweisen. Somit wird das Fehlen von Modulen als Information und als Anweisung an nachfolgende Module weitergeleitet.

Bei einer vorteilhaften Ausführungsform kann vorgesehen sein, dass die UP_Eingangsschnittstelle und die UP_Ausgangsschnittstelle jeweils drei Adern aufweisen. Somit können auf der Übertragungsstrecke eines Sub-Segmentes bis zu zwei Leerplätze von fehlenden und/oder inaktiven Modulen erkannt werden.

Das Modulbus-Segment kann insbesondere ein mikroprozessorbasierter XION MODULBUS sein.

Die Datenkonvertierung kann beispielsweise in einer Datenkomprimierung und/oder einer Datenfilterung bestehen. Insbesondere kann die Datenkonvertierung darin bestehen, eine Datenfragmentierung in Abhängigkeit von der Datenübertagungsart im Weiteren (benachbarten) Sub-Segment vorzunehmen, um die Datenübernahme und Weiter- bzw. Durchleitung zu erleichtern. Die Datenfragmentierung kann beispielsweise in der Anpassung der Datenframegröße, der Bit-Länge und/oder der Baud-Rate bestehen.

Hierbei ist der Begriff "Leitung" oder "Ader" nicht einschränkend zu verstehen, wenn nicht ausdrücklich etwas Unterschiedliches ausgeführt ist. Somit meint "Leitung" oder "Ader" eine irgendwie geartete leitende Verbindung über mindestens ein Kabel oder Kabelstrang. Sie kann aber auch (mindestens) eine Leiterbahn sein, die beispielsweise auf einer Platine aufgebracht ist, insbesondere eine Leiterbahn, die aufgedruckt oder aufgelötet ausgeführt ist.

Bei einer weiteren vorteilhaften Ausgestaltung kann vorgesehen werden, dass das Modul-Segment ein erstes Sub-Segment mit einem Gateway (Gateway-Modul) und mindestens einem Slave-Modul aufweist, sowie mindestens ein weiteres SubSegment, welches an der Eingangsseite ein als Adaptermodul ausgebildetes Slave-Modul aufweist.

Hierbei wird durch das Adaptermodul die Synchronisation der Geschwindigkeiten der Datenübertragung organisiert, indem die über die UP_Eingangsschnittstelle vom benachbarten Sub-Segment beziehungsweise dem ausgangsseitigen letzten Slave-Modul empfangene Daten einem Logikmodul zugeleitet werden und/oder bedarfsweise mindestens temporär in einem Speichermedium gespeichert werden.

Ein Sub-Segment beziehungsweise das Adaptermodul eines Sub-Segments kann unmittelbar benachbart und/oder berührend an dem letzten Slave-Modul eines datenaufwärts befindlichen Sub-Segmentes angeordnet sein. Alternativ können zwei Sub-Segmente auch über ein Verbindungskabel verbunden sein, wie 10BASE-T1L nach dem IEEE 802.3 Standard verbunden sein.

Bei einer vorteilhaften Variante kann somit das Adaptermodul mindestens ein Logikmodul aufweisen, das beispielsweise als Mikroprozessor ausgebildet ist oder mindestens einen Mikroprozessor umfasst, und welches ein verbundenes oder integriertes Speichermedium umfasst. Zur Kommunikation von Sekundärdaten in einem Substream, weist das Logikmodul mindestens einen DN_Substreamanschluss und einen UP_Substreamanschluss auf.

Die im Adaptermodul eingehenden (Primär-)Daten können somit über das Logikmodul verarbeitet und mindestens zeitweise gespeichert werden. Weiterhin kann das Logikmodul über eine weitere Datenleitung kommunizieren und Sekundärdaten senden und empfangen.

Vorteilhafterweise kann vorgesehen sein, dass das Adaptermodul derart ausgebildet ist, mindestens teilweise die Daten zu lesen und zu verarbeiten,
- die von mindestens einem Slave-Modul desselben Sub-Segments gesendet werden und/oder
- die von mindestens einem weiteren Adaptermodul oder von mindestens einem Slave-Modul eines weiteren Sub-Segments gesendet werden.

Damit besteht mittels des Adaptermoduls die Möglichkeit, selektiv Daten zu speichern und/oder aufzubereiten, zum Beispiel, um auf diesem Wege lokal aggregierte Daten oder Datenverläufe zu ermitteln. Diese können dann bedarfsweise einer übergeordneten Steuereinheit zur Verfügung gestellt werden.

Wenn sich aus dem Sinnzusammenhang nicht etwas Unterschiedliches ergibt, meint vorliegend Primärdaten, diejenigen Daten, die in der UP_Streamrichtung oder DN_Streamrichtung vom Gateway an ein Slave-Modul oder zwischen Slave-Modulen weitergeleitet werden. Dabei meint Sekundärdaten, diejenigen Daten, die im Substream über eine separate Leitung kommuniziert werden, insbesondere zwischen dem Logikmodul und einer weiteren als SPE oder SPE als PoDL (Power over Data Line) ausgebildeten Leitung.

Weiterhin ist Kommunikation oder Datenleitung synonym zu verstehen und meint jegliche Form des Datenaustauschs und -weiterleitung, wie auch das Senden und Empfangen von Daten, Primärdaten und/oder Sekundärdaten, abhängig von dem Sinnzusammenhang.

Es kann vorteilhaft sein, wenn mindestens ein Adaptermodul ausgebildet ist, alle Daten zu lesen, die von mindestens einem Slave-Modul und/oder einem weiteren Adaptermodul gesendet werden.

Auf diese Weise kann das Adaptermodul alle in DN_Streamrichtung gesendeten (Primär-)Daten auswerten, in geeigneter Weise auswerten und in der gewünschten Geschwindigkeit weiterleiten.

Es kann zudem vorteilhaft sein, wenn das Adaptermodul ausgebildet ist, nach einem Start des MODULBUS einen Timer (SysTick) zu starten, der die Laufzeit des MODULBUS-Systems, des Modulbus-Segments und/oder des jeweiligen SubSegments repräsentiert.

Bei einer vorteilhaften Ausbildung des Modulbus-Segments kann vorgesehen sein, dass in dem Sub-Segment eine erste Leitung zur Stromleitung vorgesehen ist und eine weitere Leitung zur Datenleitung und/oder Stromleitung vorgesehen ist, wobei die erste Leitung eine von der zweiten Leitung niedrigere Spannung aufweist.

Beispielsweise kann die erste Leitung, die auch das Logikmodul mit Spannung versorgt, zweiadrig ausgebildet sein und eine Spannung von 5V führen. Die zweite Leitung kann insbesondere eine 24V Leitung sein, die weiterhin datenleitend ist und beispielsweise als SPE (Single Pair Ethernet) ausgebildet ist. Über die zweite Leitung kann über einen zwischengeschalteten Spannungskonverter eine Einspeisung in die erste Leitung erfolgen. Zur Kommunikation zwischen dem Logikelement und der zweiten Leitung beziehungsweise den angeschlossenen Modulen, weist das Adaptermodul ein geeignetes PHY auf. Dies kann vorteilhafter weise darin bestehen, dass die MODULBUS-Kommunikation in den SPE-Standard konvertiert und weitergeleitet wird und umgekehrt.

Es kann beispielsweise für ein bzw. jedes Slave-Modul in UP-Streamrichtung (upstream) eine zyklische Übertragung bis zu 64Byte an Prozessausgabedaten (downstream) erfolgen, so dass in DN-Streamrichtung ebenfalls eine zyklische Übertragung von bis zu 64Byte Prozesseingabedaten erfolgt.

Analog kann weiterhin vorgesehen sein, dass eine azyklische Übertragung von bis zu 64Byte an Prozessparameterdaten erfolgt und in DN-Streamrichtung azyklisch bis 64Byte an Prozessdiagnosedaten erfolgt.

Im Maximum kann bei einer azyklischen Übertragung am Gateway bis ca. 270Byte abhängig als Daten übertragen werden.

Weiterhin kann vorgesehen werden, dass die Übertragung der oben aufgeführten Übertragungen von Daten innerhalb eines Sub-Segmentes mit einer Rate von 8Byte erfolgen, wobei dies abhängig vom jeweiligen XION Controller ist.

Im Unterschied zu dem Slave-Modulen, bei denen nur ein DN_Substream vom Logikmodul zur zweiten Leitung vorgesehen ist, ist das Adaptermodul ausgebildet, um vom Logikmodul einen DN_Substream zur zweiten Leitung und zum Logikmodul einen UP_Substream von der zweiten Leitung zu ermöglichen.

Bei einer weiter verbesserten Ausführungsform ist vorgesehen, dass ein SubSegment des Modulbus-Segmentes ausgebildet ist, eine mindestens teilweise Datenkonvertierung von in UP-Streamrichtung und/oder in DN-Streamrichtung erhaltenen Daten vorzunehmen, die
- von einem weiteren Sub-Segment und/oder
- von mindestens einem anderen Slave-Modul desselben Sub-Segmentes empfangen wurden.

Die Datenkonvertierung kann beispielsweise in einer Datenkomprimierung und/oder einer Datenfilterung bestehen. Insbesondere kann die Datenkonvertierung darin bestehen, eine Datenfragmentierung in Abhängigkeit von der Datenübertagungsart im Weiteren (benachbarten) Sub-Segment vorzunehmen, um die Datenübernahme und Weiter- bzw. Durchleitung zu erleichtern. Die Datenfragmentierung kann beispielsweise in der Anpassung der Datenframegröße, der Bit-Länge und/oder der Baud-Rate bestehen. Zur Realisierung der Datenkonvertierung, insb. Datenkomprimierung und/oder -filterung, kann vorteilhafterweise ein Speicherelement zur mindestens zeitweisen Speicherung von Daten vorgesehen werden.

Von der Erfindung ist auch ein Verfahren zur Automation einer Behandlungsanlage für Werkstücke umfasst, bei dem für die Kommunikation mindestens ein Modulbus-Segment nach einem der vorstehenden Ausführungsformen und Varianten verwendet wird. Vorteilhaferweise kann hierbei vorgesehen sein, dass mindestens zwei Sub-Segmente des Modulsegmentes vorgesehen sind, wobei in dem ersten Sub-Segment die Kommunikation mit einer ersten Geschwindigkeit erfolgt, insbesondere mit 3Mbit oder 12Mbit und in mindestens einem weiteren Sub-Segment die Kommunikation mit einer zur ersten unterschiedlichen, zweiten Geschwindigkeit erfolgt, wobei mittels eines als Adaptermodul ausgebildeten Slave-Moduls, die Synchronisation der unterschiedlichen Geschwindigkeiten erfolgt.

Alle vorstehend zum Modulbus-Segment oder zum MODULBUS-System genannten Varianten, Details und Vorteile gelten auch für das Verfahren in direkter und/oder analoger Anwendung.

Weitere Einzelheiten und Vorteile der Erfindung sollen nun anhand eines in den Zeichnungen dargestellten Ausführungsbeispiels näher erläutert werden.

Es zeigen:
- Fig. 1: schematisch das erfindungsgemäße Modul-System in einer ersten Anordnung
- Fig. 2: eine vereinfachte Schaltung für ein Adaptermodul
- Fig. 3: eine alternative Schaltung für ein Adaptermodul
- Fig. 4: eine zur Figur 1 vergleichbare Anordnung des Modul-Systems,
- Fig. 5: eine zweite Anordnung des Modul-Systems,
- Fig. 6: eine dritte Anordnung des Modul-Systems,
- Fig. 7: eine Schaltung eines Endmoduls in einer ersten Ausführungsform und
- Fig. 8: eine Schaltung eines Endmoduls in einer zweiten Ausführungsform.

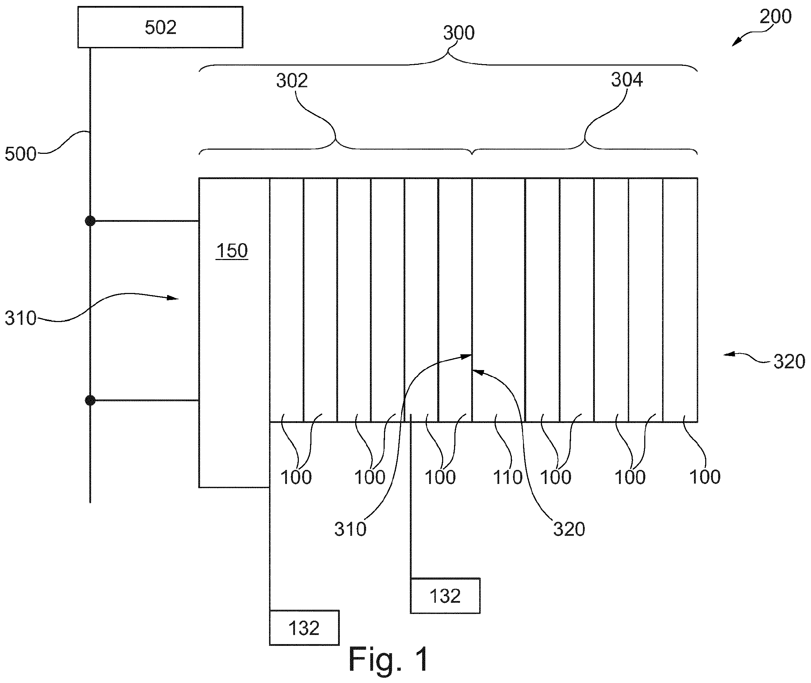

Figur 1 zeigt ein erfindungsgemäßes MODULBUS-Segment 300 als Teil eines MODULBUS-Systems 200, das über ein als Ethernet ausgebildetes Netzwerk 500 mit einer Steuerung 502 verbunden ist. An der Eingangsseite 310 des Modulsegments 300 ist ein Gateway-Modul 150, nachfolgend nur Gateway genannt, angeordnet. An dieses Gateway 150 schließen sich in Reihe geschaltet eine Anzahl von Slave-Modulen 100 an, die mit nicht dargestellten Feldgeräten verbunden sind oder verbindbar sind. Insbesondere kann jeweils ein Slave-Modul 100 und/oder ein Adaptermodul 110 mit mindestens einem Feldgerät, wie einem Sensor oder einem Aktor verbunden sein.

Das Modulsegment 300 ist in ein erstes Sub-Segment 302 und in ein zweites SubSegment 304 unterteilt. Das erste Sub-Segment 302 weist auf der Eingangsseite 310 das Gateway 150 auf, das zweite Sub-Segment 304 weist an seiner Eingangsseite 310 ein Adaptermodul 110 auf, welches die Geschwindigkeit der Datenübertragung im zugehörigen Sub-Segment 304 organisiert. Das Slave-Modul 100 an der Ausgangsseite 320 des ersten Sub-Segments 302 ist in einer Ausführungsform mit dem Adaptermodul 110 des zweiten Sub-Segments 304 analog verbunden, wie mit dem benachbarten Slave-Modul 100.

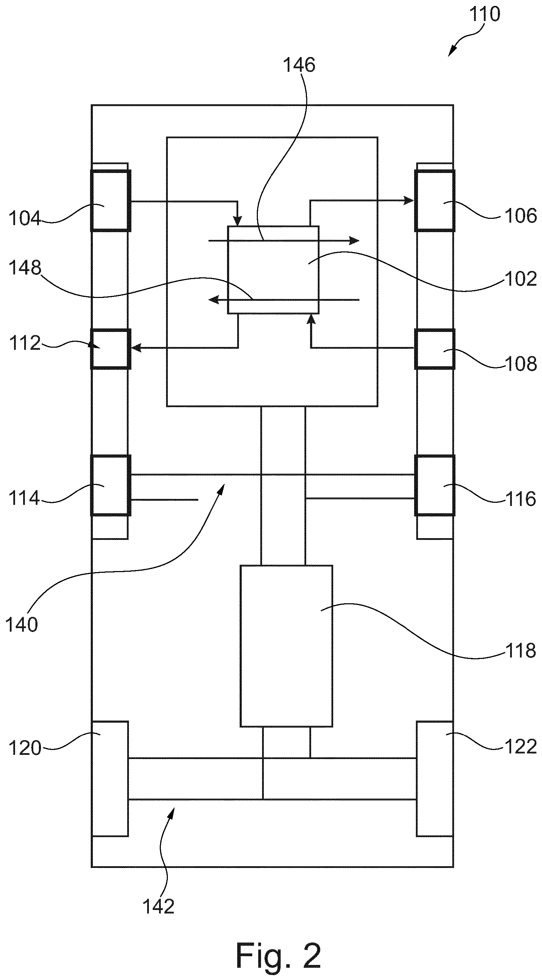

Das in der Figur 2 darstellte Adaptermodul 110, weist eine UP_Eingangsschnittstelle 104, eine UP_Ausgangsschnittstelle 106, eine DN_Ausgangsschnittstelle 112 und eine DN_Eingangsschnittstelle 108 auf. Diese vier Schnittstellen sind mit der Logikeinheit 102 verbunden, die einen Mikrokontroller und eine integrierte Speichereinheit aufweisen. Die Kommunikation der Daten erfolgt durch die Logikeinheit 102 datenaufwärts in UP_Streamrichtung 146 und datenabwärts in DN_Streamrichtung 148.

Weiter ist ein zweiadriger Spannungseingang 114 und ein Spannungsausgang 116 für eine erste Leitung 140 als 5V-Leitung vorgesehen. Im unteren Bereich des Adaptermoduls 110 ist eine zweite Leitung 142 als 24V-Leitung vorgesehen, wozu ein Spannungseingang(-sanschluss) 120 und Spannungsausgang(-sanschluss) 122 vorgesehen ist. Zudem ist ein Spannungskonverter 118 vorgesehen, der von der zweiten Leitung 142 gespeist wird und mit der ersten Leitung 140 verbunden ist. Das in der Figur 2 dargestellte Adaptermodul, dient dazu, das Signal des Datenbusses zu verstärken und zur Spannungsverstärkung für das jeweilige SubSegment 304, 306.

Vorliegend ist vorgesehen, dass die UP_Eingangsschnittstelle 104 und die UP_Ausgangsschnittstelle 106 jeweils drei Adern mit entsprechenden Anschlüssen aufweisen. Weiterhin ist vorgesehen, dass das Fehlen eines benachbarten Slave-Moduls 100 oder Adaptermoduls 110 erkannt wird. Wird ein leeres oder inaktives vorlaufendes Slave-Modul 100 oder Adaptermodul 110 erkannt, erfolgt die Datenweiterleitung von dem erkennenden Slave-Modul 100 oder dem erkennenden Adaptermodul 110 in UP-Richtung auf einer anderen Ader als die Daten empfangen wurden. Insbesondere erfolgt die Datenweiterleitung auf der definierten nächsten Ader, da die Adern eine definierte Ab- oder Reihenfolge aufweisen. Somit wird das Fehlen von Modulen als Information und als Anweisung an nachfolgende Module weitergeleitet.

Auf diese Weise können auf der Übertragungsstrecke einer dreiadrigen UP_Eingangsschnittstelle und einer dreiadrigen UP_Ausgangsschnittstelle im SubSegment bis zu zwei Leerplätze von fehlenden und/oder inaktiven Modulen erkannt werden.

Die UP_Eingangsschnittstelle 104, die DN_Ausgangsschnittstelle 112 und der zweiadriger Spannungseingang 114 können Teil eines größeren Steckverbinders sein, beispielsweise sind sie in dem gezeigten Beispiel Teil einer 7-poligen Stiftleiste. In analoger Weise können die UP_Ausgangsschnittstelle 106, die DN_Eingangsschnittstelle 108 und der zweiadrige Spannungsausgang 116 Teil eines größeren Steckverbinders sein, beispielsweise sind sie in dem gezeigten Beispiel Teil einer 7-poligen Buchsenleiste.

Anders ausgedrückt wird vom Adapater-Modul 110 die Kommunikation in DN_Streamrichtung 148 unterbrochen und logisch, manipulierend wieder zusammengeführt. Das Adaptermodul 110 ist auf der linken Seite ein Modulbusteilnehmer mit einem DN_Ausgang. Auf der rechten Seite ist das Adaptermodul 110 ein Gateway mit einem DN_Eingang. Dieses Adaptermodul 110 ist ausgebildet, Daten in UP_Streamrichtung 146 und DN_Streamrichtung 148 zu manipulieren.

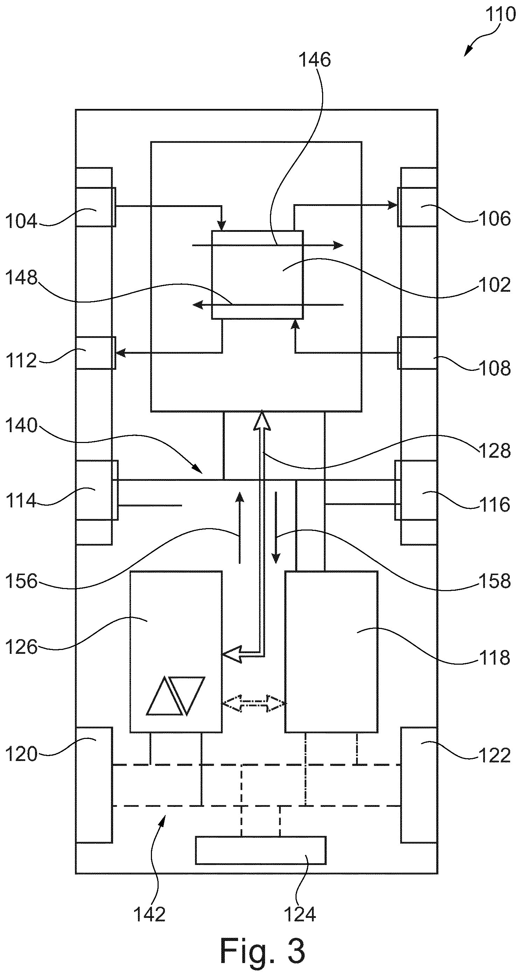

Das Ausführungsbeispiel eines Adaptermoduls 110, wie es in der Figur 3 dargestellt ist, unterscheidet sich von dem nach Figur 2 unteranderem dadurch, dass eine Konverter-und Interfaceelement 126 sowie ein Spannungsanschluss 124 vorgesehen sind, wobei die Leitung 142 mit den zugehörigen Anschlüssen zur 24V-Spannungsversorgung zwischen den Modulen vorgesehen ist.

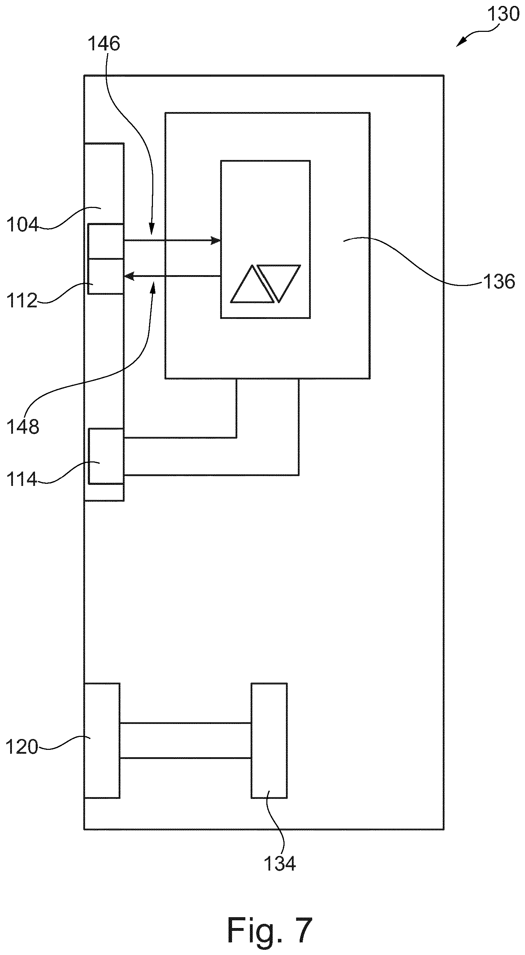

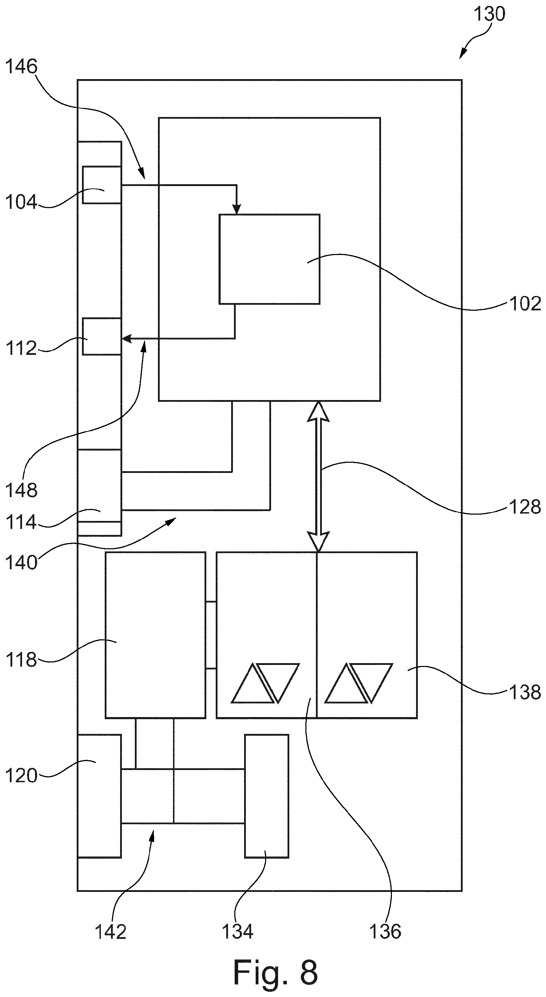

Bei dieser Ausführungsform ist das Konverter- und Interfaceelement 126 als LVDS ausgebildet. Es dient beispielsweise dazu, um mit einem Endmodul 130 verbunden zu werden, das nach einer Ausführungsform ausgebildet ist, wie sie in den Figuren 7 oder 8 dargestellt sind.

Bei einer alternativen Ausführung ist das Konverter- und Interfaceelement 126 als SPE ausgebildet, insbesondere nach dem SPE-Standard, und dient dazu, um mit einem Endmodul 130 verbunden zu werden, das nach der Ausführungsform ausgebildet ist, wie es in der Figur 8 dargestellt ist.

In den vorgenannten Ausführungsbeispielen kann die Spannungsversorgung vom Endmodul 130 zum jeweiligen Adaptermodul 110 über den Spannungsausgang 134 des Endmoduls 130 zum Spannungseingang 124 des Adaptermoduls 110 erfolgen.

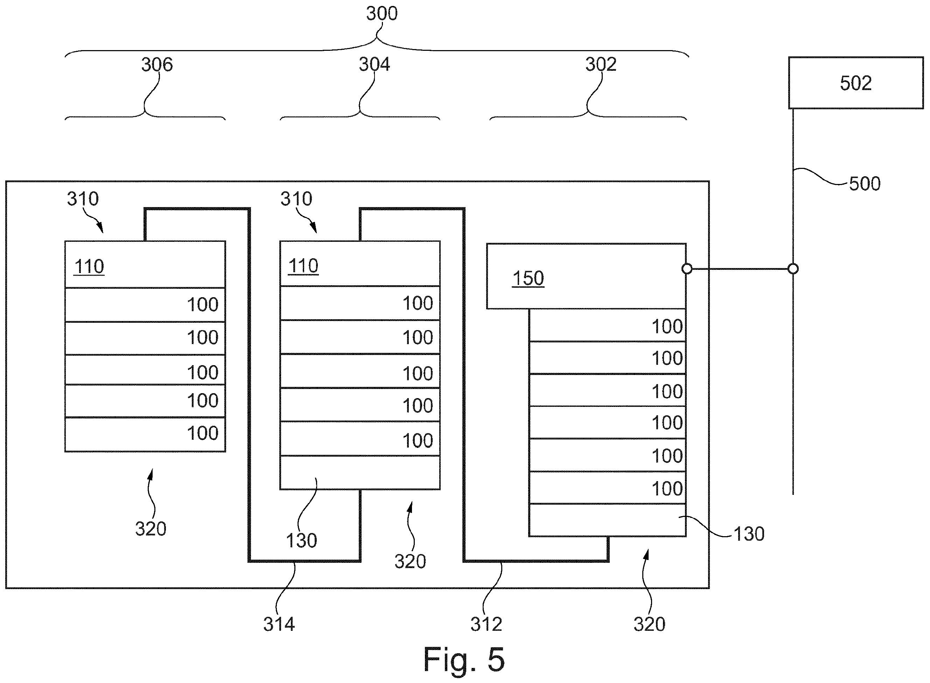

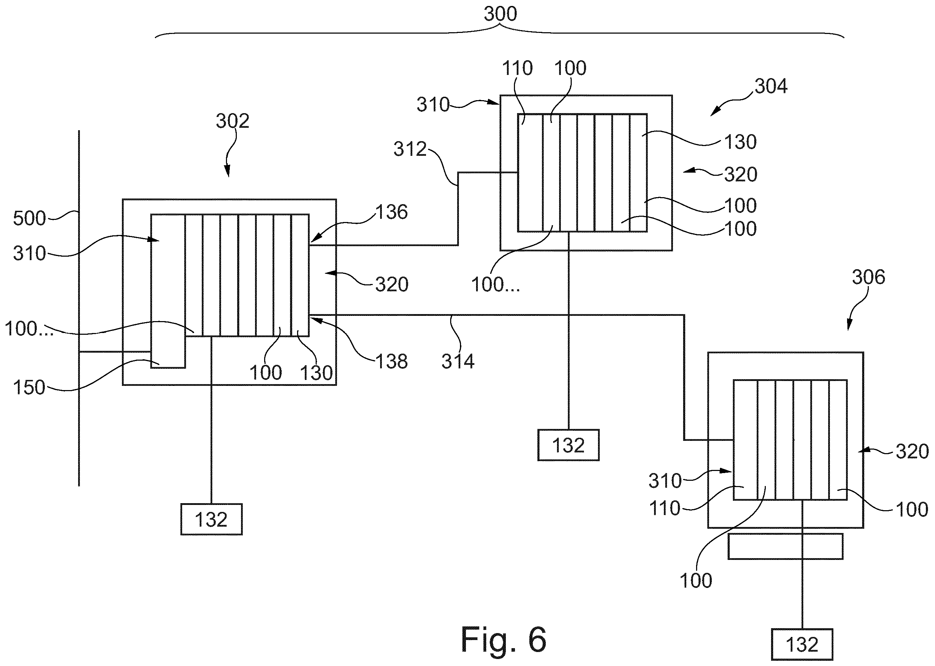

Somit kann insbesondere bei dem vorgenannten Ausführungsformen des Konverter-und Interfaceelementes 126 bei allen Ausführungsformen des MODULBUS-Segmentes 300, bei denen ein Verbindungskabel 312, 314 vorgesehen ist (Fig. 5, 6), auch eine Verbindungsleitung als Spannungsversorgung zwischen dem Spannungsausgang 136 und dem Spannungsanschluss 124 angeordnet sein.

Bei einer weiteren Ausführung ist das Konverter- und Interfaceelement 126 als SPE, insbesondere nach dem SPE-Standard, und als PoDL ausgebildet und mit einem Endmodul 130 verbunden oder verbindbar, das als Endmodul 130 nach Figur 8 ausgebildet ist. Eine separate Spannungsversorgung über den Spannungsanschluss 124 ist in diesem Fall nicht erforderlich.

Somit kann insbesondere bei der vorgenannte Ausführungsform des Konverter- und Interfaceelementes 126 für allen Ausführungsformen des MODULBUS-Segmentes 300, bei denen ein Verbindungskabel 312, 314 zwischen Sub-Segmenten 302, 304, 306 vorgesehen ist (Fig. 5, 6), keine Verbindungsleitung als Spannungsversorgung zwischen dem Spannungsausgang 136 und dem Spannungsanschluss 124 angeordnet sein.

Die zweite Leitung 142 kann von einer als SPE mit PoDL an dem Konverter- und Interfaceelement 126 verbundenen Leitung versorgt sein, wobei die zweite Leitung 142 regelmäßig nur für eine Spannungsversorgung vorgesehen ist, beispielsweise als 24V-Leitung.

Bei einer alternativen Ausführungsform, bei der das Konverter- und Interfaceelement 126 als PoDL betrieben und mit 48V versorgt wird, darf im Regelfall die Spannung nicht direkt an die Leitung 142 abgegeben werden, sondern muss erst im Spannungskonverter 118 auf 24V gesenkt werden und wird von dort an die Leitung 142, als 24V, abgegeben, was durch die strichpunktierten Linien angedeutet wurde.

Diese zweite Leitung 142 ist mit dem Spannungsanschluss 124 leitend verbunden, über den sie gespeist werden kann. Es ist ein Konverter- und Interfaceelement 126 vorgesehen, das als LVDS (Low Voltage Differential Signaling) ein Interface aufweist, beispielsweise ein seriellen RS485 oder ein LDVS (Low Voltage Differential Signaling) standardisiert nach dem ANSI/TIA/EIA-644-1995. Das Konverter- und Interfaceelement 126 ist über die Datenleitung 128 mit dem Logikmodul 102 verbunden. Hierbei sind die Verbindungeinheit 126 und das Logikmodul 102 ausgebildet, um bidirektional im UP_Substream 156 und im DN_Substream 158 zu kommunizieren. Das Konverter- und Interfaceelement 126 kann beispielsweise SPE, RS485 oder dem Schnittstellenstandard nach LVDS (Low Voltage Differential Signaling) ausgelegt sein.

Mittels des Logikmoduls 102 können also insbesondere in DN_Streamrichtung empfangene Primärdaten und über den UP_Substream 156 erhaltene Daten ausgewertet, temporär gespeichert und bedarfsweise insbesondere im DN_Substream 158 weitergeleitet werden. Wie bei der Ausführungsform nach Figur 2 können die im DN_Stream 148 empfangenen Primärdaten ebenfalls aufbereitet und über die DN_Ausgangsschnittstelle 112 an das Slave-Modul 100 oder ein sonstiges Modul des benachbarten Sub-Segmentes weitergeleitet werden und schließlich über das Gateway 150 in das Netz 500 eingespeist werden.

Das Adaptermodul 110, das eine zusätzliche Konverter- und Interfaceeinheit 126 aufweist, kann insbesondere ausgebildet sein, dass beide Verbindungen über die Konverter- und Interfaceeinheit 126 und/oder die UP_Eingangsschnittstelle 104, die DN_Ausgangsschnittstelle 112 und/oder der ein zweiadriger Spannungseingang 114 erfolgen aktiviert und/oder deaktiviert werden können.

Hierbei wird durch das Logikmodul 102 und/oder die Konverter- und Interfaceeinheit 126 erkannt, welche der beiden Verbindungen aktiviert und welche deaktiviert werden soll. Alternativ kann das Logikmodul 102 und/oder die die Konverter- und Interfaceeinheit 126 entsprechend angesteuert werden, beispielsweise vom Gateway 150, um mindestens zeitweise oder dauerhaft nur eine Verbindung vorzusehen.

Bei dem gezeigten Ausführungsbeispiel ist das Adaptermodul 110 derart ausgebildet, dass die Konverter- und Interfaceeinheit 126 nur alternativ zur UP_Eingangsschnittstelle 104 und/oder der DN_Ausgangsschnittstelle 112 verwendet werden kann. Diese Ausführungsform kommt bei Anwendungsfällen zum Einsatz, wie sie beispielsweise in den Figuren 5 oder 6 dargestellt sind, wenn die Sub-Segmente 302, 304, 306 über gesonderte Verbindungsleitungen 312, 314 datenleitend miteinander verbunden sind.

Alternativ kann vorgesehen werden, dass gegebenenfalls parallel und/oder getaktet auf beiden Übertragungswegen, nämlich der Konverter- und Interfaceeinheit 126 und in UP_Streamrichtung 146 und in DN_Streamrichtung 148 Daten empfangen werden können, wobei die Datenkommunikation über das Logikmodul 102 und/oder über eine nicht dargestellte geeignete Funktionseinheit, wie ein PHY (physical layer) organisiert wird. Über den Spannungsanschluss 124 wird die zweite Leitung 142 spannungsversorgt.

In einer nicht dargestellten Ausführungsform ist in der Datenleitung 128 und/oder der Verbindung vom Spannungskonverter 118 zur Leitung 140 mindestens ein steuerbares Schaltelement vorgesehen, um die jeweiligen Verbindungen gesteuert zu aktivieren oder deaktivieren.

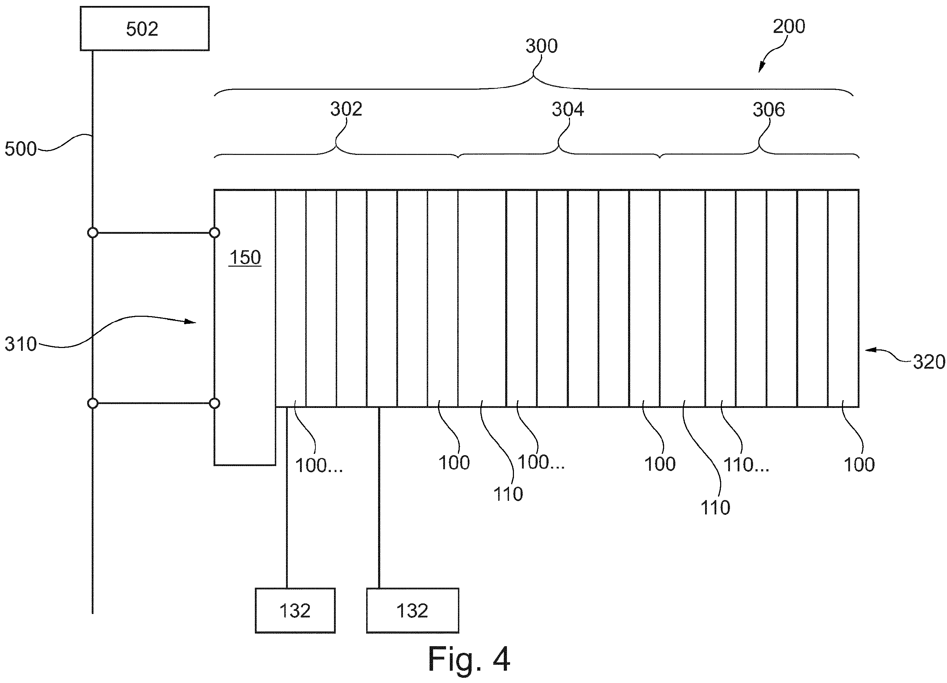

In der Figur 4 ist eine zur Figur 1 vergleichbare Anordnung des Modul-Systems 200 und die zugehörigen Sub-Module 302, 304 und 306 dargestellt. Hierbei schließt sich direkt angrenzend an das zweite Sub-Segment 304 ein weiteres Sub-Segment 306 an, wobei das zweite und das dritte Sub-Segment 304, 306 jeweils ein Adaptermodul 110 an der Eingangsseite 310 aufweisen. Die Anzahl der Sub-Segmente (302, 304. 306) ist nicht beschränkt. Jedes Sub-Segment (304, 306) kann mit einer eigenen Geschwindigkeit kommunizieren und beim Vorliegen entsprechend konfigurierter Logikmodule (102), können auch unterschiedliche Protokolle, insbesondere proprietäre Protokolle außerhalb des IO-Link kommuniziert werden, insbesondere ein XION Protokoll.

In der Figur 5 ist eine zweite Anordnung des Modul-Systems 200 und des ModulSegments 300 dargestellt, wobei die drei Sub-Segmente 302, 304 und 306 mit dem zugehörigen Adaptermodul 110 und den jeweiligen Slave-Modulen 100 in Reihe geschaltet sind. Die Sub-Segmente 302, 304 und 306 untereinander sind über Verbindungskabel 312, 314 verbunden, welche als 10BASE-T1L nach dem IEEE 802.3 Standard als SPE ausgebildet sind und eine Länge von bis zu 100 Metern aufweisen.

Das Ausführungsbeispiel der Figur 5 zeigt insbesondere eine Verschaltung, wie sie in einem Schaltschrank vorgenommen werden kann. Hier sind die Verbindungskabel 312 und 314 relativ kurze Verbindungen, die eine maximale Länge von ca. 2m aufweisen.

Vorteilhafterweise ist das Konverter- und Interfaceelement 126 bei dem Adaptermodul 110 nach Fig. 3 nach dem LVDS oder dem SPE (PoDL) ausgebildet, wobei eine LVDS-Ausführung für eine Verbindung zu einem Endmodul 130 gemäß der Fig. 7 vorteilhaft ist und eine SPE-Ausführung als PoDL für eine Verbindung zu einem Endmodul 130, das analog der Fig. 8 ausgebildet ist.

Hierzu weisen das erste und das zweite Sub-Segment 302, 304 auf der Endseite 320 jeweils ein Endmodul 130 auf, wie in den Figuren 7, 8 dargestellt und hiermit im Zusammenhang näher beschrieben wurde.

Bei dieser Ausführungsform, sowie der in Figur 6, sind die UP_Eingangsschnittstelle 104 und die DN_Ausgangsschnittstelle 112 durch die Beabstandung der Sub-Segmente 302, 304, 306 nicht durch bpsw. ein benachbartes Slave-Modul 100 belegt. Daher können die Schnittstellen beispielsweise von der Logikeinheit 102 und/oder dem Endmodul 130 abgeschaltet werden. Die Kommunikation zwischen dem Endmodul 130 und dem verbundenen Adaptermodul 110 verläuft über die Verbindungsleitungen 312, 314, die bspw. SPE-Verbindungen darstellen können.

Die Anordnung nach Figur 6 zeigt eine dritte Anordnung des Modul-Segments 300, bei dem analog zur Figur 5 das zweite und dritte Sub-Segmente 304 und 306 über Verbindungskabel 312, 314 mit dem ersten Sub-Segment 302 verbunden sind, allerdings beide vom ersten, das Gateway 150 umfassende Sub-Segment 302 abzweigen. Dieses erste Sub-Segment 302 weist endständig an der Ausgangsseite 320 eine Endmodul 130 auf, das insbesondere analog der Ausführungsvariante der Figur 8 ausgebildet ist. Damit sind die Verbindungsleitungen 312, 314 als 10BASE-T1L nach dem IEEE 802.3 Standard als SPE ausgebildet. Sie können einen Länge von bis zu 100 Metern aufweisen.

Das zweite Sub-Segment 304 weist an der Ausgangsseite 320 im Unterschied zu dem dritten Sub-Segmente 306 ein Endmodul 130 auf, das nach einem der Ausführungsvarianten, wie sie in Figur 7 oder in Figur 8 dargestellt wurden, ausgebildet ist, allerdings ohne Verbindung zu einem weiteren Sub-Segment. Damit sind die Verbindungsleitungen

Solche Aufteilungen sind insbesondere dann vorteilhaft, wenn eine Modul-Segment 300 zu groß ist und eine Aufteilung in Sub-Segmente 302, 304, 306 sinnvoll ist. Die Figur 7 (passt zu 5) zeigt ein Endmodul (130), das als passives Bus-Endmodul ausgebildet ist.

Das in der Figur 7 gezeigte Endmodul 130 umfasst eine UP_Eingangsschnittstelle 104 und eine DN_Ausgangsschnittstelle 112 zur Kommunikation der Primärdaten. Die Schnittstellen sind mit einem Konverter- und Interfaceelement 136 verbunden. Das Konverter- und Interfaceelement 136 weist ein Interface oder einen Port auf, beispielsweise ein COM1, wie ein RJ11, ein seriellen RS485 oder ein LDVS (Low Voltage Differential Signaling) standardisiert nach dem ANSI/TIA/EIA-644-1995. Das Konverter- und Interfaceelement 136 weist nur einen Anschluss in UP_Streamrichtung 146 für Primärdaten auf und einen Anschluss für Primärdaten in DN_Streamrichtung 148. In UP_Streamrichtung 146 wird vorliegend unidirektional gesendet, beispielsweise über RS 232 TxD. In DN_Streamrichtung 148 wird ebenfalls unidirektional gesendet, beispielsweise über RS 232 RxD.

Hierbei ist die DN_Streamrichtung 148 grundsätzlich bidirektional ausgebildet ist. Zur unidirektionalen Datenweiterleitung ist in dem Endmodul 130 für die DN_Streamrichtung 148 eine Logikeinheit erforderlich, die Primärdaten in DN-Streamrichtung 148 entsprechend über das Konverter- und Interfaceelement 136 weiterleitet. Diese Logikeinheit ist vom Konverter- und Interfaceelement 136, das beispielsweise als LVDS, RS232 oder RS485 ausgebildet ist, umfasst.

Das Konverter- und Interfaceelement 136 organisiert damit die Umleitung beziehungsweise den definierten Teil der rückzuleitenden Primärdaten zum einzigen unmittelbar benachbarten Slave-Modul 100. Weiterhin weist das Endmodul 130 einen Spannungseingang 120 und einen Spannungsausgang 134 für die zweite Leitung 142 auf, wobei über den Spannungsausgang 134 eine Verbindungsleitung 312, 314 zu einem benachbarten Sub-Segment 304, 306 verbunden werden kann. Das Endmodul 130, wie es in der Figur 7 dargestellt ist, ist ein einfacher Pegelumsetzer mit einer Logikeinheit.

Insgesamt hat es sich als vorteilhaft herausgestellt, wenn bei einer Verbindung zwischen dem Endmodul 130 nach Figur 7 über die Konverter- und Interfaceeinheit 136 zu einem Adaptermodul 110, die Verbindung nach dem LVDS erfolgt.

Gemäß der Fig. 8 ist die zweite Leitung 142 in dem gezeigten Ausführungsbeispiel als 24V-Leitung ausgebildet, die der reinen Spannungsversorgung dient. In den Konverter- und Interfaceeinheiten 136, 138 wird aus den über die Datenleitung 128 gesendeten Daten und den eingespeisten 24V der Leitung 142, das SPE gebildet (PoDL).

Diese Ausführungsform eines Endmoduls 130 dient somit als einfacher Levelkonverter, der ein eingehendes XION Modulbus 5V Protokollsignal in differenzielle Signale umwandelt, so dass größere Distanzen überwunden werden können.

Das empfange und verbunden Adaptermodul 110 eines nachfolgenden SubSegments 304, 306 muss hierzu nach dem Ausführungsbeispiel gemäß der Figur 3 ausgebildet sein, so dass die Sekundärdaten mindestens teilweise in geeignete Primärdaten gewandelt werden und den nicht-intelligenten Slave-Modulen 100 zur Weiterleitung zur Verfügung gestellt werden können.

Die Figur 8 zeigt weiterhin ein Endmodul (130), das als aktives Bus-Endmodul ausgebildet ist und worüber mindestens ein weiteres Sub-Segment 304, 306 datenund stromleitend verbindbar ist.

Das Slave-Endmodul 130 gemäß der Figur 8 ist analog dem Adaptermodul 110 der Figur 3 aufgebaut, auf die verwiesen wird. Dabei weist das Logikelement 102 nur einen Anschluss in UP_Streamrichtung 146 für Primärdaten auf und einen Anschluss Primärdaten in DN_Streamrichtung 148. Im Unterschied zum Slave-Endmodul 130 der Figur 7, kommuniziert das Logikmodul 102 über das Konverter- und Interfaceelement 136 bzw. 138 mit der zweiten Leitung 142, die als SPE ausgebildet ist. Hierbei ist die Leitung 142 eine 24V Versorgungsleitung, die die Versorgungsspannung für die verbundenen elektronischen Bauteile und Mikroprozessoren zu Verfügung stellt, auch für die Konverter- und Interfaceelement 136 bzw. 138. Das Logikmodul 102 ist von der Leitung 142 und den hiermit verbundenen elektronischen Bauteilen in der Regel galvanisch getrennt.

Im Spannungskonverter 118 werden alle benötigten Versorgungsspannungen für das Adaptermodul 130 erzeugt und es werden die eingespeisten 24V dem Interfaceelement 136 und 138 zur Verfügung gestellt.

Die Konverter- und Interfaceelemente 136, 138, die auch als Hardwaresteckverbinder ausgebildet sind, weisen hierzu jeweils ein Interface oder einen Port auf, beispielsweise ein COM1, wie ein RJ11, einen seriellen RS485 oder ein LDVS (Low Voltage Differential Signaling) standardisiert nach dem ANSI/TIA/EIA-644-1995. Das Interfaceelement 136 und 138 ist beispielsweise ein SPE(PoDL) an denen die entsprechenden Verbindungskabel 312, 314 angeschlossen werden.

Insgesamt hat es sich als vorteilhaft herausgestellt, wenn bei einer Verbindung zwischen dem Endmodul 130 nach Figur 8 über eine der Konverter- und Interfaceeinheit 136, 138 zu einem Adaptermodul 110, die Verbindung nach dem SPE mit PoDL erfolgt.

Analog der Figur 7 kann dieses Endmodul 130 einen Spannungseingang 120 und einen Spannungsausgang 134 für die zweite Leitung 142 aufweisen, wobei über den Spannungsausgang 134 eine Verbindungsleitung 312, 314 zu einem benachbarten Sub-Segment 304, 306 angebracht werden kann.

### Bezugszeichenliste

- 100: Slave-Modul
- 102: Logikmodul
- 104: UP_Eingangsschnittstelle
- 106: UP_Ausgangsschnittstelle
- 108: DN_Eingangsschnittstelle
- 110: Adaptermodul
- 112: DN_Ausgangsschnittstelle
- 114: Spannungsanschluss
- 116: Spannungsausgang
- 118: Spannungskonverter
- 120: Spannungseingang
- 122: Spannungsausgang
- 124: Spannungsanschluss
- 126: Konverter- und Interfaceelement
- 128: Datenleitung

- 130: EndEndmodul
- 132: Feldgerät
- 134: Spannungsausgang
- 136: Konverter- und Interfaceelement
- 138: Konverter- und Interfaceelement

- 140: Leitung, erste
- 142: Leitung, zweite
- 146: UP_Streamrichtung
- 148: DN_Streamrichtung
- 150: Gateway(-Modul)
- 156: UP_Substream
- 158: DN_Substream

- 200: MODULBUS-System

- 300: Modulbus-Segment
- 302: Sub-Segmente
- 304: Sub-Segment
- 306: Sub-Segment
- 310: Eingangsseite
- 312: Verbindungskabel
- 314: Verbindungskabel
- 320: Ausgangsseite
- 500: Netz
- 502: Steuerung

## Patentansprüche

1. MODULBUS-Segment (300) zur Anbindung an ein Netzwerk (500) oder an ein MODULBUS-System (200), insbesondere an ein Feldbusnetz oder Ethernet, umfassend mindestens ein Gateway (150) und mindestens drei Slave-Module (100), insbesondere vier oder mehr Slave-Module (100), wobei das Gateway (150) und die mindestens drei Slave-Module (100) in Reihe geschaltet sind und gemeinsam das Modulbus-Segment (300) bilden, wobei mindestens ein Slave-Modul (100) das Folgende umfasst
- zur Stromversorgung einen mindestens zweiadrigen Anschuss für eine Leitung (140),
- zur Kommunikation datenaufwärts mindestens eine UP_Eingangsschnittstelle (104) und mindestens eine UP _Ausgangsschnittstelle (106) und datenabwärts eine DN_Ausgangsschnittstelle (108), und wobei an der Eingangsseite (310) des ModulSegments (300) das Gateway (150) angeordnet ist,
**dadurch gekennzeichnet, dass**
das Modulbus-Segment (300) mindestens zwei Sub-Segmente (302, 304, 306) aufweist oder hieraus gebildet ist, welche jeweils eine Eingangsseite (310) und eine Ausgangsseite (320) aufweisen, und wobei mindestens ein erstes Sub-Segment (302, 304, 306) ausgebildet ist,
- zur Kommunikation in einer ersten Geschwindigkeit Daten zu übertragen und mindestens ein zweites Sub-Segment (302, 304, 305) ausgebildet ist, zur Kommunikation in einer zweiten Geschwindigkeit Daten zu übertragen, die unterschiedlich ist zur ersten Geschwindigkeit und/oder
- eine mindestens teilweise Datenkonvertierung von Daten vorzunehmen, die empfangen wurden, wobei ein erstes Sub-Segment (302) der mindestens zwei Sub-Segmente (302, 304, 306) das Gateway (150) und mindestens ein Slave-Modul (100) der mindestens drei Slave-Module (100) aufweist; und mindestens ein weiteres Sub-Segment (304, 306) der mindestens zwei Sub-Segmente (302, 304, 306) an der Eingangsseite (310) ein als Adaptermodul (110) ausgebildetes Slave-Modul der mindestens drei Slave-Module (100) aufweist.

2. Modulbus-Segment (300) nach Anspruch 1, **dadurch gekennzeichnet, dass** das Adaptermodul (110) mindestens einen Logikmodul (102) und ein verbundenes oder integriertes Speichermedium umfasst, und weiterhin zur Kommunikation von Sekundärdaten in einem Substream (156, 158) mindestens einen Anschluss aufweist, der über eine Datenleitung (128) mit einem Konverter- und Interfaceelement (126, 136, 138) verbunden ist.

3. Modulbus-Segment (300) nach Anspruch 2, **dadurch gekennzeichnet, dass** das Adaptermodul (110) ausgebildet ist, mindestens teilweise die Daten zu lesen,
- die von mindestens einem Slave-Modul (100) desselben Sub-Segments (302) gesendet werden,
- die von mindestens einem weiteren Adaptermodul (110) oder von mindestens einem Slave-Modul (100) eines weiteren Sub-Segments (304, 306) gesendet werden.

4. Modulbus-Segment (300) nach einem der Ansprüche 2 oder 3, **dadurch gekennzeichnet, dass** das Adaptermodul (110) ausgebildet ist, alle Daten zu lesen, die von mindestens einem Slave-Modul (100) und/oder einem weiteren Adaptermodul (112) gesendet werden.

5. Modulbus-Segment (300) nach einem der Ansprüche 2 bis 4, **dadurch gekennzeichnet, dass** das Adaptermodul (110) ausgebildet ist, nach einem Start des MODULBUS einen Timer zu starten, der die Laufzeit des MODULBUS repräsentiert.

6. Modulbus-Segment (300) nach einem der Ansprüche 2 bis 5, **dadurch gekennzeichnet, dass** in dem Sub-Segment (302, 304, 306) eine erste Leitung (140) zur Datenleitung und/oder Stromleitung vorgesehen ist und eine weitere Leitung (142) zur Datenleitung und/oder Stromleitung vorgesehen ist, wobei die erste Leitung (140) eine von der zweiten Leitung (142) niedrigere Spannung aufweist.

7. Modulbus-Segment (300) nach einem der vorherigen Ansprüche, **dadurch gekennzeichnet, dass** das ein erstes Sub-Segment (302, 304, 306) ausgebildet ist, eine mindestens teilweise Datenkonvertierung von Daten vorzunehmen, die
- von einem weiteren Sub-Segment (302, 304, 306) und/oder
- von mindestens einem anderen Slave-Modul (100) desselben ersten Sub-Segmentes (302, 304, 306) empfangen wurden.

8. Verfahren zur Automation einer Behandlungsanlage für Werkstücke, **dadurch gekennzeichnet, dass** zur Kommunikation ein Modulbus-Segment (300) nach einem der vorherigen Ansprüche verwendet wird, und wobei in dem ersten Sub-Segment (302) die Kommunikation mit einer ersten Geschwindigkeit erfolgt und in mindestens einem weiteren Sub-Segment (304, 306) die Kommunikation mit einer zur ersten unterschiedlichen, zweiten Geschwindigkeit erfolgt, wobei mittels eines als Adaptermodul (110) ausgebildeten Slave-Moduls (100), die Synchronisation der unterschiedlichen Geschwindigkeiten erfolgt.

9. Verfahren nach einem der Ansprüche 8, **dadurch gekennzeichnet, dass** im Adaptermodul (110) mindestens eines Sub-Moduls (302, 304, 306), eine erste Kommunikation in UP_Streamrichtung (146) und DN_Streamrichtung (148) über das Logikmodul (102) erfolgt, und eine weitere Kommunikation über eine Datenleitung (128) als Sub_Stream über ein Konverter- und Interfaceelement (126) zu einer weiteren Leitung (142), die insbesondere als SPE ausgebildet ist, erfolgt.

## Claims

1. MODULE BUS segment (300) for connection to a network (500) or to a MODULE BUS system (200), in particular to a fieldbus network or an Ethernet, comprising at least one gateway (150) and at least three slave modules (100), in particular four or more slave modules (100), the gateway (150) and the at least three slave modules (100) being connected in series and, together, forming the module bus segment (300), at least one slave module (100) comprising the following
- for supplying power, an at least two-wire connection for a line (140),
- for upstream communication, at least one UP_input interface (104) and at least one UP_output interface (106), and for downstream communication, a DN_output interface (108), and the gateway (150) being arranged on the input side (310) of the module segment (300), **characterized in that**
the module bus segment (300) has or is formed from at least two subsegments (302, 304, 306), each of which has an input side (310) and an output side (320), and wherein at least one first subsegment (302, 304, 306) is designed
- to transmit data for communicating at a first speed and at least one second subsegment (302, 304, 305) is designed to transmit data for communicating at a second speed, which is different from the first speed, and/or
- to perform an at least partial data conversion of data that have been received, wherein a first subsegment (302) of the at least two subsegments (302, 304, 306) has the gateway (150) and at least one slave module (100) of the at least three slave modules (100); and at least one further subsegment (304, 306) of the at least two subsegments (302, 304, 306) has, on the input side (310), one slave module of the at least three slave modules (100), which is in the form of an adapter module (110).

2. Module bus segment (300) according to Claim 1, **characterized in that** the adapter module (110) comprises at least one logic module (102) and a connected or integrated storage medium, and furthermore, for communicating secondary data in a substream (156, 158), has at least one connection that is connected to a converter and interface element (126, 136, 138) via a data line (128).

3. Module bus segment (300) according to Claim 2, **characterized in that** the adapter module (110) is designed to read at least some of the data
- that are sent by at least one slave module (100) of the same subsegment (302),
- that are sent by at least one further adapter module (110) or by at least one slave module (100) of a further subsegment (304, 306).

4. Module bus segment (300) according to either of Claims 2 and 3, **characterized in that** the adapter module (110) is designed to read all the data that are sent by at least one slave module (100) and/or a further adapter module (112).

5. Module bus segment (300) according to one of Claims 2 to 4, **characterized in that** the adapter module (110) is designed so as, after the MODULE BUS has started, to start a timer that represents the runtime of the MODULE BUS.

6. Module bus segment (300) according to one of Claims 2 to 5, **characterized in that** that there is provision in the subsegment (302, 304, 306) for a first line (140) to the data line and/or power line and for a further line (142) to the data line and/or power line, the first line (140) having a lower voltage than the second line (142).

7. Module bus segment (300) according to one of the preceding claims, **characterized in that** a first subsegment (302, 304, 306) is designed to perform an at least partial data conversion of data that have been received
- from a further subsegment (302, 304, 306) and/or
- from at least one other slave module (100) of the same first subsegment (302, 304, 306).

8. Method for automating a treatment system for workpieces, **characterized in that** a module bus segment (300) according to one of the preceding claims is used for communication, and wherein the communication in the first subsegment (302) takes place at a first speed and the communication in at least one further subsegment (304, 306) takes place at a second speed, which is different from the first speed, a slave module (100) in the form of an adapter module (110) being used to synchronize the different speeds.

9. Method according to Claim 8, **characterized in that** in the adapter module (110) of at least one submodule (302, 304, 306), a first communication in the UP_stream direction (146) and the DN_stream direction (148) is performed by means of the logic module (102), and a further communication via a data line (128) is performed as a substream by means of a converter and interface element (126) to a further line (142), which is in particular in the form of an SPE.

## Revendications

1. Segment de bus modulaire (300) destiné à la connexion à un réseau (500) ou à un système de bus modulaire (200), en particulier à un réseau de bus de terrain ou à Ethernet, comprenant au moins une passerelle (150) et au moins trois modules esclaves (100), en particulier quatre modules esclaves (100) ou plus, la passerelle (150) et les au moins trois modules esclaves (100) étant branchés en série et formant ensemble le segment de bus modulaire (300), au moins un module esclave (100) comprenant ce qui suit
- pour l'alimentation électrique, une borne à au moins deux fils pour un câble (140),
- pour la communication vers l'amont, au moins une interface d'entrée UP (104) et d'au moins une interface de sortie UP (106) et vers l'aval au moins une interface de sortie DN (108), et la passerelle (150) étant disposée du côté entrée (310) du segment de module (300), **caractérisé en ce que**
le segment de bus modulaire (300) possède ou est formé à partir d'au moins deux sous-segments (302, 304, 306), lesquels possèdent chacun un côté entrée (310) et un côté sortie (320), et au moins un premier sous-segment (302, 304, 306) étant formé,
- pour la communication, transmettre des données à une première vitesse et au moins un deuxième sous-segment (302, 304, 305) étant formé, pour la communication, transmettre des données à une deuxième vitesse, qui est différente de la première vitesse et/ou
- effectuer une conversion de données au moins partielle de données qui ont été reçues, un premier sous-segment (302) des au moins deux sous-segments (302, 304, 306) possédant la passerelle (150) et au moins un module esclave (100) des au moins trois modules esclaves (100) ; et au moins un sous-segment supplémentaire (304, 306) des au moins deux sous-segments (302, 304, 306) possédant, du côté entrée (310), un module esclave des au moins trois modules esclaves (100) réalisé sous la forme d'un module adaptateur (110).

2. Segment de bus modulaire (300) selon la revendication 1, **caractérisé en ce que** le module adaptateur (110) comprend au moins un module logique (102) et un support de stockage connecté ou intégré, et possède en outre au moins un port destiné à la communication de données secondaires dans un sous-flux (156, 158), lequel est relié à un élément convertisseur et d'interface (126, 136, 138) par l'intermédiaire d'une ligne de données (128).

3. Segment de bus modulaire (300) selon la revendication 2, **caractérisé en ce que** le module adaptateur (110) est configuré pour lire au moins partiellement les données,
- qui sont envoyées par au moins un module esclave (100) du même sous-segment (302),
- qui sont envoyées par au moins un module adaptateur (110) supplémentaire ou par au moins un module esclave (100) d'un sous-segment supplémentaire (304, 306).

4. Segment de bus modulaire (300) selon l'une des revendications 2 ou 3, **caractérisé en ce que** le module adaptateur (110) est configuré pour lire toutes les données qui sont envoyées par au moins un module esclave (100) et/ou un module adaptateur supplémentaire (112).

5. Segment de bus modulaire (300) selon l'une des revendications 2 à 4, **caractérisé en ce que** le module adaptateur (110) est configuré pour démarrer, après un démarrage du bus modulaire, un temporisateur qui représente le temps de fonctionnement du bus modulaire.

6. Segment de bus modulaire (300) selon l'une des revendications 2 à 5, **caractérisé en ce qu'**une première ligne (140) servant de ligne de données et/ou de câble d'alimentation est prévue dans le sous-segment (302, 304, 306) et une ligne supplémentaire (142) servant de ligne de données et/ou de câble d'alimentation est prévue, la première ligne (140) présentant une tension inférieure à celle de la deuxième ligne (142).

7. Segment de bus modulaire (300) selon l'une des revendications précédentes, **caractérisé en ce que** le premier sous-segment (302, 304, 306) est configuré pour effectuer une conversion de données au moins partielle de données qui ont été reçues
- par un sous-segment supplémentaire (302, 304, 306) et/ou
- par au moins un autre module esclave (100) du même premier sous-segment (302, 304, 306).

8. Procédé d'automatisation d'une installation de traitement pour des pièces ouvrées, **caractérisé en ce qu'**un segment de bus modulaire (300) selon l'une des revendications précédentes est utilisé pour la communication, et la communication dans le premier sous-segment (302) s'effectuant à une première vitesse et la communication dans au moins un sous-segment supplémentaire (304, 306) s'effectuant à une deuxième vitesse différente de la première, la synchronisation des différentes vitesses s'effectuant au moyen d'un module esclave (100) réalisé sous la forme d'un module adaptateur (110).

9. Procédé selon la revendication 8, **caractérisé en ce que** dans le module adaptateur (110) d'au moins un sousmodule (302, 304, 306) est effectuée une première communication dans la direction de diffusion UP (146) et la direction de diffusion DN (148) par l'intermédiaire du module logique (102), et une communication supplémentaire s'effectue par l'intermédiaire d'une ligne de données (128) sous forme de sous-flux par l'intermédiaire d'un élément convertisseur et d'interface (126) vers une ligne supplémentaire (142), qui est notamment réalisée sous forme de SPE.
